# EUROPÄISCHE PATENTSCHRIFT

(11) **EP 2 943 715 B1**
(45) Veröffentlichungstag und Bekanntmachung des Hinweises auf die Patenterteilung: **29.03.2017**
(21) Anmeldenummer: 14703250.2
(22) Anmeldetag: 07.01.2014
(51) Int. Cl.: F16M 11/04, F16M 13/02, F16M 11/10

(54) **WANDHALTER FÜR EINEN FLACHBILDSCHIRM**
WALL BRACKET FOR A FLAT SCREEN
SUPPORT MURAL POUR ÉCRAN PLAT

(30) Priorität: 10.01.2013 DE 202013000202 U
(43) Veröffentlichungstag der Anmeldung: 18.11.2015
(73) Patentinhaber: Peters, Joachim, 79232 March (DE)
(72) Erfinder: PETERS, Joachim, 79232 March (DE)
(74) Vertreter: Geitz Truckenmüller Lucht Christ
(86) Internationale Anmeldenummer: PCT/DE2014/100003
(87) Internationale Veröffentlichungsnummer: WO 2014/108127

(56) Entgegenhaltungen:
- DE-U1- 20 012 445
- US-A1- 2011 163 052

## Beschreibung

Die Erfindung geht aus von einem Wandhalter für einen Flachbildschirm.

Derartige Wandhalter weisen in der Regel eine erste Platte auf, die an der Rückseite des Flachbildschirms anzuordnen ist und eine zweite Platte, welche an einer Wand anzuordnen ist. Beide Platten sind durch einen Schwenkarm oder mindestens einen Faltarm miteinander verbunden. Auf diese Weise kann der Winkel, den der Flachbildschirm mit der Wand einschließt, eingestellt werden. Als nachteilig erweist sich, dass derartige Wandhalter aufwändig herzustellen und zu installieren sind.

Die US 2011/163052 A1 offenbart eine Halterung für Bildschirme. Die Halterung weist einen ersten Rahmen auf, der an der Rückseite eines Bildschirms befestigt wird, und einen zweiten Rahmen, der an einer Wand befestigt wird. Der erste Rahmen kann an dem zweiten Rahmen eingehängt werden. Ferner kann der Winkel zwischen dem ersten Rahmen und dem zweiten Rahmen eingestellt werden. Damit weist der Wandhalter die oben genannten Nachteile auf, dass er aufwändig herzustellen und zu installieren ist.

Die DE 200 12 445 U1 offenbart ein Aufstellungssystem zum Darstellen von Rahmen, gerahmten Spiegeln, gerahmten Bildern oder anderen festen und flächig hängend dargestellten Objekten verschiedener Größen. Das Ausstellungssystem weist mindestens zwei Seitenteile auf, die mit je zwei vertikalen Reihen von Durchbohrungen ausgestattet sind. Die Seitenteile ruhen jeweils in einem auf dem Boden aufgesetzten Bodenteil. Eine runde Stange wird zwischen den Seitenteilen in je zwei Löcher derselben Höhe eingeführt. Das System ist nicht zum Aufhängen an einer Wand sondern zum Aufstellung auf einem Boden ausgebildet.

Der Erfindung liegt die Aufgabe zugrunde, einen Wandhalter für Flachbildschirme zur Verfügung zu stellen, der nur aus einigen wenigen Komponenten besteht und leicht zu installieren ist.

Diese Aufgabe wird durch einen Wandhalter mit den Merkmalen des Anspruchs 1 gelöst. Der Wandhalter zeichnet sich dadurch aus, dass er eine längenvariable erste Stange aufweist, die an einer oder zwei Wänden in einer im wesentlichen horizontalen Ausrichtung befestigt wird, und mindestens zwei Haken, die an der Rückseite des Flachbildschirms befestigt werden und an der ersten Stange eingehängt werden. Die Haken sind mit einem Verschluss ausgestattet, der in Schließstellung den Haken in eine Öse oder einen Ring verwandelt. Dadurch wird ausgeschlossen, dass sich die Haken bei einer unbeabsichtigten, auf den Flachbildschirm einwirkenden Kraft von der ersten Stange lösen können, und der Flachbildschirm zu Boden fällt.

Gehäuse von Flachbildschirmen sind an der Rückseite in der Regel mit Gewindebuchsen ausgestattet. Darüber hinaus können an der Rückseite der Gehäuse von Flachbildschirmen Ausnehmungen oder Durchgangsöffnungen vorgesehen sein. An den Gewindebuchsen, Ausnehmungen oder Durchgangsöffnungen können die Haken befestigt werden. Hierzu eignet sich beispielsweise eine Schraub-oder Steckverbindung zwischen dem Gehäuse des Flachbildschirms und den Haken der Wandhalter. Darüber hinaus können die Haken auch als Doppelhaken mit zwei Hakenteilen ausgebildet sein, so dass ein Hakenteil am Gehäuse des Flachbildschirms und der andere Hakenteil an der Stange einhängbar ist.

Die Befestigungseinrichtung ist so ausgestaltet, dass mit ihr die erste Stange entweder an einer Wand oder an zwei Wänden befestigt werden kann, wobei die beiden Wände einen Winkel kleiner als 180° einschließen. Damit erlaubt der Wandhalter nicht nur das Anordnen eines Flachbildschirms an einer ebenen Wand sondern auch das Aufhängen eines Flachbildschirms in einer durch zwei Wände begrenzten Ecke. Dabei kann die Befestigungseinrichtung die erste Stange an ihren beiden Enden abstützen oder in Abschnitten, die einen Abstand von den Enden der ersten Stange aufweisen. Bei der Befestigung des Wandhalters an einer Wand können die Abschnitte, in denen die Befestigungseinrichtung die erste Stange abstützt, im wesentlichen frei gewählt werden. Bei der Befestigung des Wandhalters an zwei Wänden unterstützt die Befestigungseinrichtung die erste Stange in bevorzugter Weise an ihren Enden.

Die erste Stange ist in ihrer Länge variabel und kann somit an den Einsatzort und an die Größe des Flachbildschirms angepasst werden. Bei einer Befestigung des Wandhalters in einer durch zwei Wände begrenzten Ecke kann die erste Stange exakt in ihrer Länge auf die gewünschte Ausrichtung des Flachbildschirms eingestellt werden.

Zum Installieren des Wandhalters wird zunächst die Befestigungseinrichtung an der oder den Wänden befestigt. Dabei wird berücksichtigt, dass die mit der Befestigungseinrichtung an der Wand oder den Wänden angeordnete erste Stange im wesentlichen horizontal ausgerichtet ist. Anschließend wird die erste Stange in ihrer Länge an den Einsatzort und den zu befestigenden Flachbildschirm angepasst und an der Befestigungseinrichtung angeordnet. Die Haken werden an der Rückseite des Flachbildschirms befestigt. Mit den Haken wird der Flachbildschirm an der ersten Stange eingehängt. Mit dem Verschluss werden die Haken geschlossen und an der ersten Stange gesichert. Nach dem Installieren kann der Flachbildschirm um die erste Stange gedreht werden, sofern dies zu Reinigungszwecken oder zum Ein- und Ausstecken von Netzanschlüssen, externen Datenträgern oder weiterer Geräte notwendig ist.

Damit setzt sich der erfindungsgemäße Wandhalter aus nur einigen wenigen Komponenten zusammen. Ferner ist er schnell und einfach zu installieren.

Nach einer vorteilhaften Ausgestaltung der Erfindung ist die erste Stange eine Teleskopstange.

Die Befestigungseinrichtung weist mindestens zwei Rohrschellen auf. Dabei kann es sich um einteilige oder zweiteilige Rohrschellen handeln. Die Rohrschellen umschließen in ihrer Schließstellung die erste Stange. Um die erste Stange in einer im wesentlichen horizontalen Ausrichtung an der Wand anzuordnen, sind mindestens zwei Rohrschellen notwendig, die die erste Stange in zwei verschiedenen Abschnitten halten. Zum Befestigen der Rohrschellen an einer Wand sind diese beispielsweise mit einem Anschlussgewinde ausgestattet. Das Anschlussgewinde kann beispielsweise Teil einer Mutter sein, die fest mit der Rohrschelle verbunden ist. In das Anschlussgewinde wird eine Gewindestange oder ein Gewindestift eingeschraubt. Die Gewindestange oder der Gewindestift wird an einer Wand befestigt. Die Rohrschellen können aus Kunststoff oder Metall bestehen. In der Schließstellung der Rohrschellen wird die erste Stange derart gesichert, dass sie sich nicht unerwünscht aus der Befestigungseinrichtung lösen kann.

Nach einer nichterfindungsgemäßen Ausführungsform weist die Befestigungseinrichtung zwei Stangenaufnahmen auf, in die die erste Stange mit ihren Enden einhängbar ist. Jede dieser Stangenaufnahmen bildet ein U-förmiges Profil. Dieses Profil umgreift die erste Stange von unten und den Seiten. Nach oben ist das Profil offen, so dass die erste Stange von oben in das Profil eingeführt werden kann. Bei Bedarf kann das Profil nach dem Einbau der Stange an der nach oben offenen Seite geschlossen werden. Derartige Profile sind auch zum Aufhängen von Kleiderstangen in Kleiderschränken bekannt. Für die Anordnung der Stangenaufnahmen in einer durch zwei Wände gebildeten Ecke ist jede der beiden Stangenaufnahmen an einem Sockel angeordnet, um die Neigung der Stangenaufnahme zu der Wand einzustellen. Bei dieser Anordnung ist die erste Stange mit jedem Ende in einer der Stangenaufnahmen angeordnet. Dabei ist die jeweils eine Stirnseite der Stange in einer Stangenaufnahme aufgenommen.

Nach einer weiteren vorteilhaften Ausgestaltung der Erfindung umfasst der Wandhalter eine zweite längenvariable Stange, die an der Rückseite des Flachbildschirms befestigbar ist und sich an einer Wand abstützt. Dabei steht die an der Rückseite des Flachbildschirms angeordnete Stange vorteilhafterweise im wesentlichen von der Rückseite des Flachbildschirms senkrecht nach hinten ab. Sie befindet sich bei dem an der Stange aufgehängten Flachbildschirm unterhalb der Stange und den Haken. Über die Länge der zweiten Stange kann der Neigungswinkel des an der Stange aufgehängten Flachbildschirms eingestellt werden. Die zweite Stange wird beispielsweise an der Rückseite des Flachbildschirms auf dessen Gehäuse aufgeklebt.

Nach einer weiteren vorteilhaften Ausgestaltung der Erfindung weist die erste Stange einen runden Querschnitt auf.

Nach einer weiteren vorteilhaften Ausgestaltung der Erfindung beträgt der Durchmesser der Stange zwischen 1,0 cm und 2,5 cm, besonders bevorzugt zwischen 1,5 cm und 2,5 cm. In einem besonders bevorzugten Ausführungsbeispiel beträgt der Durchmesser 1,9 cm.

Nach einer weiteren vorteilhaften Ausgestaltung der Erfindung beträgt die Länge der Stange mindestens 25 cm, besonders bevorzugt mindestens 28 cm.

Nach einer weiteren vorteilhaften Ausgestaltung der Erfindung beträgt die Länge der Stange maximal 80 cm, besonders bevorzugt mindestens 50 cm.

Nach einer weiteren vorteilhaften Ausgestaltung der Erfindung ist als Verschluss für jeden der Haken ein Stift oder Splint vorgesehen, der durch zwei Ausnehmungen an dem Haken gesteckt wird. Alternativ dazu kann der Haken als Karabinerhaken ausgebildet sein.

Weitere Vorteile und vorteilhafte Ausgestaltungen der Erfindung sind der nachfolgenden Beschreibung, der Zeichnung und den Ansprüchen entnehmbar.

### Zeichnung

In der Zeichnung ist ein Ausführungsbeispiel des erfindungsgemäßen Wandhalters dargestellt. Es zeigen:
- Figur 1: Ausführungsbeispiel eines an einer Wand angeordneten Wandhalters mit Flachbildschirm in Seitenansicht,
- Figur 2: Abschnitt einer ersten Stange des Wandhalters gemäß Figur 1 mit einer Befestigungseinrichtung und Haken,
- Figur 3: erste Stange mit Befestigungseinrichtung des Wandhalters nach Figur 1 in Seitenansicht,
- Figur 4: Haken des Wandhalters nach Figur 1 in Seitenansicht,
- Figur 5: zweite Stange des Wandhalters nach Figur 1 in Seitenansicht,
- Figur 6: Wandhalter mit Flachbildschirm gemäß Figur 1 in einer Ansicht von oben,
- Figur 7: nicht erfindungsgemäßes Ausführungsbeispiel eines Wandhalters, welcher an zwei eine Ecke begrenzenden Wänden angeordnet ist, in einer Ansicht von oben.

### Beschreibung des Ausführungsbeispiels

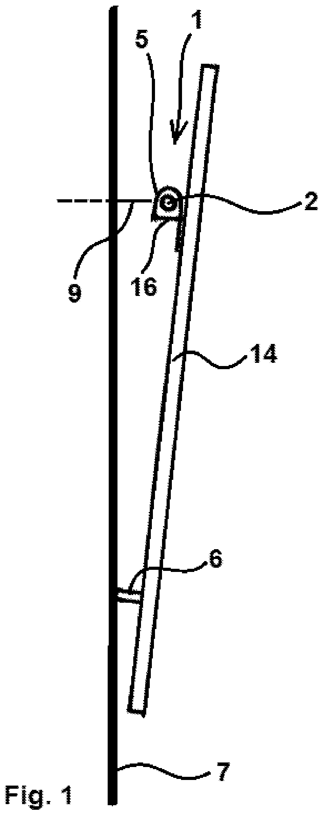

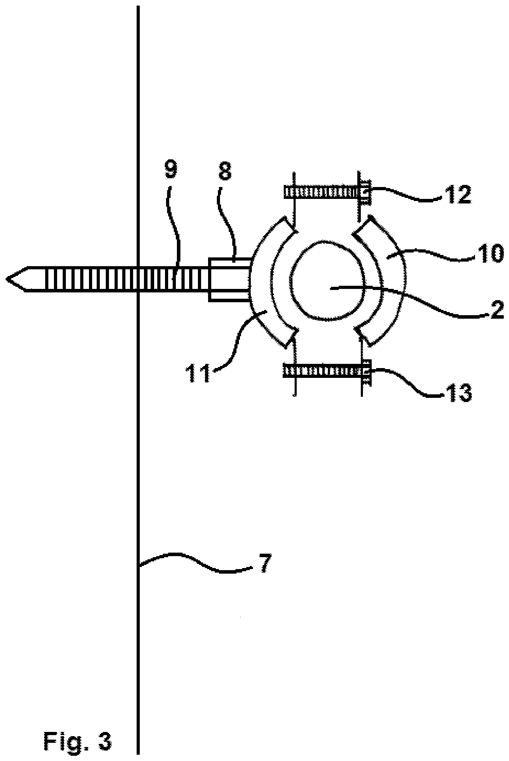

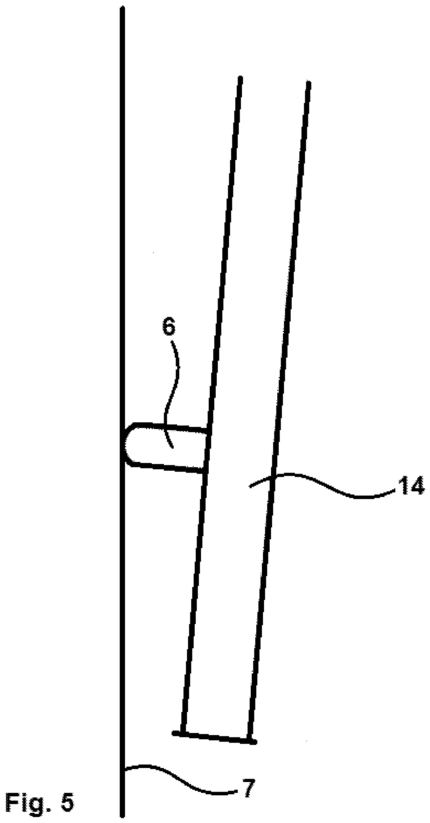

In den Figuren 1 bis 6 ist ein Ausführungsbeispiel eines Wandhalters 1 dargestellt. Der Wandhalter 1 weist eine längenvariable erste Stange 2, eine Befestigungseinrichtung 3 mit zwei Rohrschellen 4, zwei Haken 5 und eine zweite längenvariable Stange 6 auf. Dabei ist die erste längenvariable Stange 2 mit der Befestigungseinrichtung 3 an einer Wand 7 befestigt. Hierzu sind die beiden Rohrschellen 4 mit jeweils einem Anschlussgewinde 8 und einer Gewindestange 9 ausgestattet. Die Gewindestange 9 wird in der Wand 7 verankert. Dies ist in Figur 3 dargestellt. Die Rohrschellen 4 sind beide identisch. Es handelt sich um zweiteilige Rohrschellen. Die beiden Teile 10, 11 jeder der Rohrschellen 4 werden über Schrauben 12, 13 miteinander verspannt und dadurch gegen die Stange 2 gedrückt. Dadurch wird die Stange 2 in den Rohrschellen 4 eingespannt.

In Figur 1 sind die Rohrschellen 4 der Befestigungseinrichtung 3 durch den Haken 5 abgedeckt und daher nicht erkennbar.

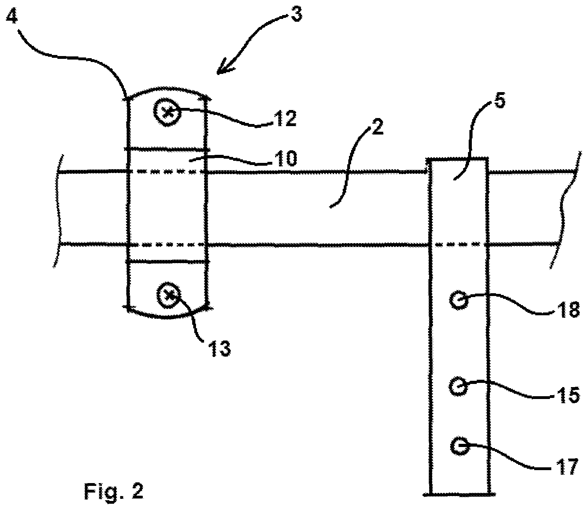

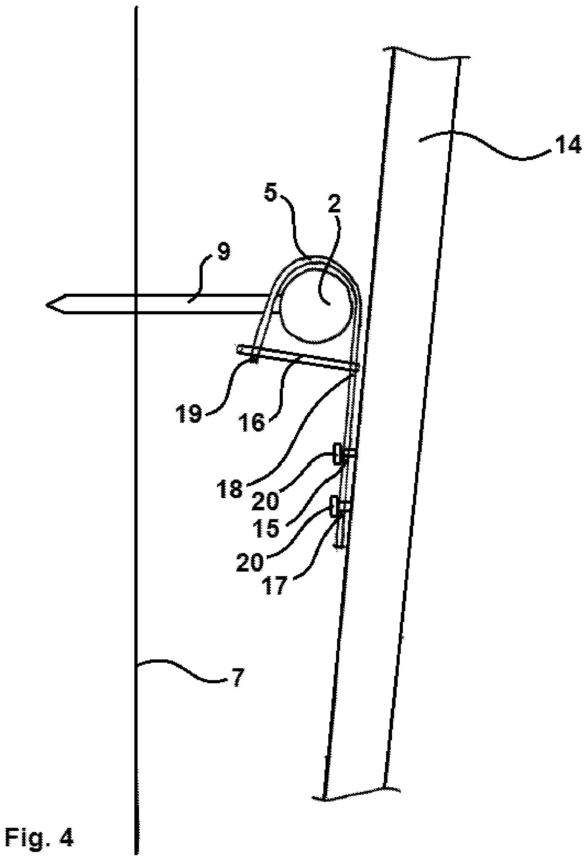

In Figur 2 ist ein Abschnitt der ersten Stange 2 mit einer Rohrschelle 4 und einem Haken 5 dargestellt. Es handelt sich um eine Aufsicht auf die der Rückseite des Flachbildschirms zugewandte Seite. Der Flachbildschirm ist in dieser Ansicht nicht dargestellt, da er die Stange 2, die Rohrschelle 4 und den Haken 5 ansonsten abdecken würde. In dieser Darstellung sind ein Teil 10 der zweiteiligen Rohrschelle 4 und zwei Schrauben 12 und 13 erkennbar, die das Teil 10 mit einem in Figur 3 dargestellten zweiten Teil 11 der Rohrschelle 4 verbinden. Ferner ist der Haken 5 in Figur 2 dargestellt. Der Haken 5 ist mit einer ersten Durchgangsöffnung 15, einer zweiten Durchgangsöffnung 17 und einer dritten Durchgangsöffnung 18 ausgestattet. Darüber hinaus weist der Haken eine vierte Durchgangsöffnung 19 auf, welche in Figur 4 erkennbar ist. Die erste und zweite Durchgangsöffnung 15, 17 dienen zur Befestigung des Hakens 5 an der Rückseite eines Flachbildschirms 14. Diese Befestigung ist auch in Figur 4 in einer Seitenansicht dargestellt. Zur Befestigung dienen Schrauben 20. Diese werden in Gewindebuchsen an der Rückseite des Flachbildschirms 14 eingeschraubt. Die dritte Durchgangsöffnung 18 und die vierte Durchgangsöffnung 19 dienen als Aufnahmen für einen Stift 16, der den Haken 5 an der ersten Stange 2 sichert. Dies ist in Figur 4 dargestellt.

In Figur 4 ist zur besseren Übersichtlichkeit von der Befestigungseinrichtung nur die Gewindestange 9 gezeigt. Die Rohrschellen 4 und das Anschlussgewinde 8 sind nicht dargestellt. Diese sind ohnehin durch den in Figur 4 gezeigten Haken 5 zumindest teilweise verdeckt.

An der Rückseite des Flachbildschirms wird unterhalb von den Haken 5 eine zweite längenvariable Stange 6 befestigt, die nach hinten in Richtung der Wand 7 von der Rückseite des Flachbildschirms 14 absteht. Mit dieser zweiten Stange stützt sich der Flachbildschirm 14 in seinem unteren Bereich an der Wand 7 ab.

Durch die Länge der zweiten Stange kann die Neigung des Flachbildschirms eingestellt werden.

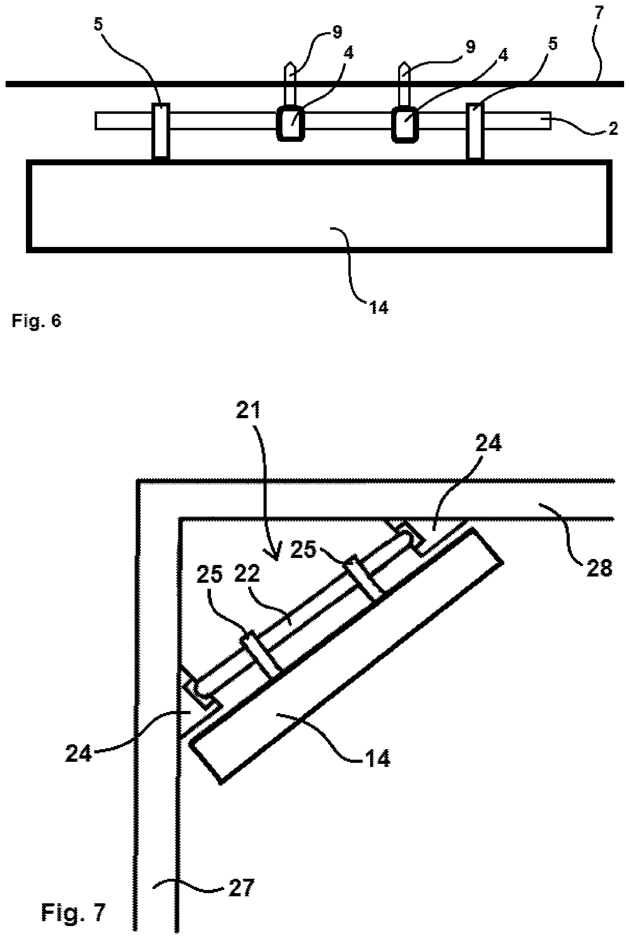

In Figur 6 ist der Wandhalter 1 in einer Ansicht von oben dargestellt. In dieser Ansicht sind die erste Stange 2, die beiden Rohrschellen 4 der Befestigungseinrichtung 3, die Haken 5, die Wand 7 und der Flachbildschirm 14 erkennbar.

Figur 7 zeigt ein nicht erfindungsgemäßes Ausführungsbeispiel eines Wandhalters 21 in einer Ansicht von oben. Er weist wie das erfindungsgemäße Ausführungsbeispiel eine erste längenvariable Stange 22, eine Befestigungseinrichtung und zwei Haken 25 auf. Der Unterschied zu dem erfindungsgemäßen Ausführungsbeispiel besteht hinsichtlich der Befestigung des Wandhalters 21 an den Wänden 27, 28, welche eine Ecke begrenzen. In dem nicht erfindungsgemäßen Ausführungsbeispiel schließen die beiden Wände 27, 28 einen Winkel von 90° ein. Die Befestigungseinrichtung ist mit zwei Stangenaufnahmen 24 ausgestattet, die jeweils ein Ende der Stange 22 umgreifen und die jeweils an einer der beiden Wände 27, 28 angeordnet sind. Genau wie bei dem erfindungsgemäßen Ausführungsbeispiel werden die beiden Haken 25 an der Rückseite eines Flachbildschirms 14 befestigt und an der Stange 22 eingehängt.

Sämtliche Merkmale der Erfindung können sowohl einzeln als auch in beliebiger Kombination miteinander erfindungswesentlich sein.

### Bezugszahlen

- 1: Wandhalter
- 2: Erste längenvariable Stange
- 3: Befestigungseinrichtung
- 4: Rohrschelle
- 5: Haken
- 6: Zweite längenvariable Stange
- 7: Wand
- 8: Anschlussgewinde
- 9: Gewindestange
- 10: Teil der Rohrschelle
- 11: Teil der Rohrschelle
- 12: Schraube
- 13: Schraube
- 14: Flachbildschirm
- 15: Erste Durchgangsöffnung
- 16: Stift
- 17: Zweite Durchgangsöffnung
- 18: Dritte Durchgangsöffnung
- 19: Vierte Durchgangsöffnung
- 20: Schraube
- 21: Wandhalter
- 22: Erste längenvariable Stange
- 23 24: Stangenaufnahme
- 25: Haken
- 26 27: Wand
- 28: Wand

## Patentansprüche

1. Wandhalter für einen Flachbildschirm
mit einer längenvariablen ersten Stange (2, 22),
mit einer Befestigungseinrichtung (3), welche die erste Stange (2, 22) in einer im wesentlichen horizontalen Ausrichtung an mindestens einer Wand (7, 27, 28) befestigt,
mit mindestens zwei Haken (5, 25), welche an der Rückseite des Flachbildschirms (14) befestigbar sind, und welche an der ersten Stange (2, 22) einhängbar sind,
mit einem Verschluss (16) für die Haken (5),
wobei die Befestigungseinrichtung (3) mindestens zwei Rohrschellen (4) aufweist, welche in Schließstellung die erste Stange umschließen,
wobei die Rohrschellen mit einem Anschlussgewinde ausgestattet sind,
in welches eine an einer Wand befestigbare Gewindestange oder ein an einer Wand befestigbarer Gewindestift eingeschraubt ist.

2. Wandhalter nach Anspruch 1, **dadurch gekennzeichnet, dass** die erste Stange (2, 22) eine Teleskopstange ist.

3. Wandhalter nach einem der vorhergehenden Ansprüche, **dadurch gekennzeichnet, dass** sie eine längenvariable zweite Stange (6) aufweist, die an der Rückseite des Flachbildschirms (14) befestigbar ist, und die sich an einer Wand (7) abstützt.

4. Wandhalter nach einem der vorhergehenden Ansprüche, **dadurch gekennzeichnet, dass** jeder Haken (5) zwei Durchgangsöffnungen (18, 19) aufweist, dass der Haken (5) mit einem Stift (16) oder Splint als Verschluss ausgestattet ist, und dass der Stift (16) oder Splint durch die zwei Durchgangsöffnungen (18, 19) in dem Haken (5) steckbar ist.

## Claims

1. Wall bracket for a flat screen
with a length-variable first bar (2, 22),
with a fastening device (3) which fastens the first bar (2, 22) in a substantially horizontal orientation to at least one wall (7, 27, 28),
with at least two hooks (5, 25) which are mountable on the rear side of the flat screen (14) and which are hangable on the first bar (2, 22),
with a closure (16) for the hooks (5)
wherein the fastening device (3) comprises at least two pipe clips (4), enclosing the first bar in a closed position,
wherein the pipe clips are equipped with a connecting thread,
into which a threaded rod mountable on a wall or a headless pin mountable on a wall is screwed.

2. Wall bracket according to claim 1, **characterised in that** the first bar (2, 22) is a telescopic bar.

3. Wall bracket according to one of the previous claims, **characterised in that** it exhibits a length-variable second bar (6) which can be fastened on the rear side of the flat screen (14) and is supported on a wall (7).

4. Wall bracket according to one of the previous claims, **characterised in that** each hook (5) exhibits two through openings (18, 19), that the hook (5) is equipped with a pin (16) or splint as closure, and that the pin (16) or splint is connectable in the hook (5) by means of the two through openings (18, 19).

## Revendications

1. Support mural pour écran plat
qui comprend une première barre de longueur variable (2, 22),
un dispositif de fixation (3) fixant la première barre (2, 22) essentiellement à l'horizontale à au moins un mur (7, 27, 28),
au moins deux crochets (5, 25) pouvant être fixés à la face arrière de l'écran plat (14) et être accrochés à la première barre (2, 22),
un axe de fermeture (16) pour les crochets (5),
ledit dispositif de fixation (3) présentant au moins deux colliers d'attache (4) qui, en position fermée, entourent la première barre,
lesdits colliers d'attache étant dotés d'un filetage de raccordement dans lequel est vissée une tige filetée pouvant être fixée à un mur ou une vis sans tête pouvant être fixée à un mur.

2. Support mural selon la revendication 1, **caractérisé en ce que** la première barre (2, 22) est une barre télescopique.

3. Support mural selon l'une quelconque des revendications précédentes, **caractérisé en ce que** ledit dispositif présente une seconde barre de longueur variable (6) pouvant être fixée à la face arrière de l'écran plat (14) et prenant appui sur un mur (7).

4. Support mural selon l'une quelconque des revendications précédentes, **caractérisé en ce que** chaque crochet (5) présente deux trous (18, 19), **en ce que** le crochet (5) est doté d'une goupille (16) ou d'une goupille fendue faisant office d'axe de fermeture, et **en ce que** la goupille (16) ou la goupille fendue peuvent être insérées dans les deux trous (18, 19) du crochet (5).
